(19) Europäisches Patentamt
European Patent Office
Office européen des brevets

(11) Veröffentlichungsnummer: **0 278 444**
**A2**

# (12) EUROPÄISCHE PATENTANMELDUNG

(21) Anmeldenummer: **88101762.8**

(22) Anmeldetag: **06.02.88**

(51) Int. Cl.⁴: **C08L 67/06**, //(C08L67/06, 71:02)

(30) Priorität: **12.02.87 DE 3704358**

(43) Veröffentlichungstag der Anmeldung:
**17.08.88 Patentblatt 88/33**

(84) Benannte Vertragsstaaten:
**DE ES FR GB IT NL**

(71) Anmelder: **BASF Aktiengesellschaft**
**Carl-Bosch-Strasse 38**
**D-6700 Ludwigshafen(DE)**

(72) Erfinder: **Holoch, Jan, Dr.**
**Koenigsberger Strasse 22a**
**D-6906 Leimen(DE)**
Erfinder: **Georg, Gerhard**
**Dietlindstrasse 44**
**D-6700 Ludwigshafen(DE)**
Erfinder: **Demmler, Kurt, Dr.**
**Irisstrasse 8**
**D-6700 Ludwigshafen(DE)**

## (54) Elastomermodifizierte ungesättigte Polyesterharze.

(57) Die Erfindung betrifft ungesättigte Polyesterharze aus einem ungesättigten Polyester, Monomeren und einem Ester einer ungesättigten Dicarbonsäure mit einem hydroxylterminierten Polyoxybutylen, dessen Kette durch Vorreaktion mit einem Diisocyanat verlängert wurde.

EP 0 278 444 A2

## Elastomermodifizierte ungesättigte Polyesterharze

Die Erfindung betrifft härtbare Formmassen aus elastomermodifizierten ungesättigten Polyesterharzen zur Herstellung von Formstoffen mit verringerter Rißanfälligkeit.

Formstoffe aus ungesättigten Polyesterharzen haben ein weites Anwendungsgebiet gefunden. Meist werden die Harze faserverstärkt verarbeitet. Von großer Bedeutung sind in den letzten Jahren SMC-und BMC-Anwendungen geworden. Nachteilig ist jedoch in allen Anwendungsfällen die hohe Sprödigkeit der Polyesterharzmatrix. Bei Stoß-oder Schlageinwirkung kann dies zu Rißbildung in der Matrix führen. Die Rißbildung hat zur Folge, daß Flüssigkeit, die mit dem Formteil in Berührung kommt, eindiffundieren und die Faser schädigen kann. Risse können auch bereits während der Härtung auftreten, wenn diese zur Erzielung kurzer Zykluszeiten relativ schnell durchgeführt wird.

Aufgabe der Erfindung war daher, die Rißanfälligkeit von ungesättigten Polyesterharzen deutlich zu verringern. In der EP-A-70 755 werden UP-Harzmassen beschrieben, die das Reaktionsprodukt aus Polyoxybutylen ($M_n$ = 1000 - 4000) und Maleinsäureanhydrid enthalten und sich durch geringen Schrumpf auszeichnen sollen. Dieser Zusatz reduziert auch die Rißanfälligkeit.

Es wurde nun gefunden, daß die Rißanfälligkeit der Formteile wesentlich stärker verringert werden kann, wenn ein Polyoxybutylenoligoamid eingesetzt wird.

Gegenstand der Erfindung sind demzufolge härtbare Formmassen aus

a) einem ungesättigten Polyester,

B) ethylenisch ungesättigten, mit A copolymerisierbaren Monomeren,

C) 5 - 95 Gew.-%, bezogen auf A + B, eines Polyoxybutylenoligoesters, sowie gegebenenfalls

D) üblichen Initiatoren, Polymerisationsbeschleunigern, Inhibitoren, Gleitmitteln, inerten Lösungsmitteln, Füllstoffen, Verstärkungsfasern, Verdickungsmitteln und schrumpfmindernden Zusätzen, dadurch gekennzeichnet, daß die Komponente C ein Ester einer ungesättigten Dicarbonsäure mit einem hydroxylterminierten Polyoxybutylen ist, dessen Kette durch Vorreaktion mit einem Diisocyanat verlängert wurde.

Zu den Komponenten ist im einzelnen zu sagen:

Als ungesättigte Polyester A eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren eingebaut werden, z.B. Bernsteinsäure, Glutarsäure, Adipinsäure, Sebacinsäure, Phthalsäureanhydrid, o-Phthalsäure, Isophthalsäure, Terephthalsäure, Tetrahydrophthalsäure und Endomethylentetrahydrophthalsäure.

Die ungesättigten Polyester können mit Dicyclopentadien bzw. dessen Derivaten oder Substitutionsprodukten modifiziert sein. Diese Umsetzungen sind bekannt. Wenn man von Diestern mit hoher Säurezahl oder freier Maleinsäure ausgeht und bei Temperaturen zwischen 120 und 140°C arbeitet, erhält man im wesentlichen eine Addition des Dicyclopentadiens an endständige Carboxyl-bzw. Hydroxylgruppen, wobei sich endständige Dihydrodicyclopentadienylether-bzw. Dihydrodicyclopentadienylestergruppen bilden. Setzt man Polyester mit niedriger Säurezahl ein und arbeitet bei höheren Temperaturen, vorzugsweise oberhalb von 170°C, so spaltet sich das Dicyclopentadien in zwei Moleküle Cyclopentadien, welches sich an Ethylendicarbonsäureester-Strukturen des Polyesters addiert und Endomethylentetrahydrophthalsäureester-Strukturen bildet.

Als copolymerisierbare, ethylenisch ungesättigte monomere Verbindungen B kommen die üblicherweise zum Herstellen ungesättigter Polyesterformmassen verwendeten Allyl-und vorzugsweise Vinylverbindungen in Frage, Vinylaromaten, wie Styrol, substituierte Styrole, wie p-Chlorstyrol oder Vinyltoluol, Ester der

Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester, wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen im allgemeinen in einer Menge von 10 bis 80, vorzugsweise von 20 bis 70 Gew.-%, bezogen auf das Gesamtgewicht der Komponenten A + B enthalten.

Die elastifizierende Komponente C erhält man vorzugsweise durch Reaktion von 1,5 bis 2 Molen Maleinsäureanhydrid oder Maleinsäuredihydrodicyclopentadienylmonoester mit 1 Mol eines hydroxylterminierten Polyoxybutylens der Formel

$$HO-CH_2-CH_2-CH_2-CH_2-(O-CH_2-CH_2-CH_2-CH_2)_n-OH$$

oder

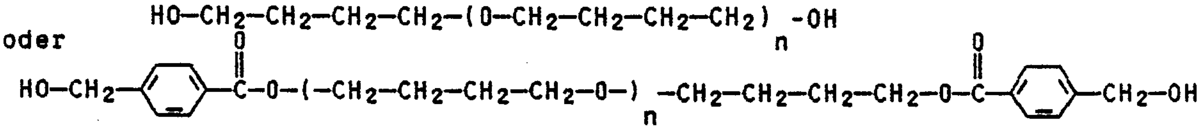

mit n = 6 bis 40.

Das hydroxymethylphenyl-terminierte Polyoxybutylen wird durch Umsetzung von Polyoxybutylen mit Hydroxymethylbenzoesäuremethylester dargestellt. Die Kettenverlängerung des Polyoxybutylens erfolgt erfindungsgemäß durch Reaktions mit einem Diisocyanat. Das Reaktionsprodukt wird anschließend endgruppenmodifiziert, wobei die Modifizierung durch Umsetzung mit Maleinsäureanhydrid oder Maleinsäuredihydrodicyclopentadienylmonoester erfolgt. Der Maleinsäuredihydrodicyclopentadienylmonoester wird durch Reaktion von Maleinsäureanhydrid mit Dicyclopentadien und Wasser bzw. durch Reaktion von Maleinsäureanhydrid mit 8(9)-Hydroxy-tricyclo[5.2.1.0$_{2,6}$]-dec-3-en dargestellt. Die im Rahmen der Erfindung bevorzugten Polyoxybutylene haben durchschnittliche Molekulargewichte ($M_n$) von 600 bis 3000 (Hydroxylzahl von 185 bis 36). Sie werden auch als Polytetrahydrofurane bezeichnet.

Eine große Vielfalt von organischen Diisocyanaten, aromatische, aliphatische und cycloaliphatische Diisocyanate, kann für die Vorreaktion mit Polyoxybutylen verwendet werden. Als Beispiel seien genannt: Toluylen-2,6-diisocyanat, Toluylen-2,4-diisocyanat, m-Phenylendiisocyanat, 4,4'-Bisphenylendiisocyanat, 1,5-Naphthylendiisocyanat, 4,4'-Diisocyanatodiphenylmethan, 2,4'-Diisocyanatodiphenylsulfon, 3,3'-Diisocyanatodiphenylsulfon, 4,4'-Diisocyanatodiphenylsulfid, 1,4-Tetramethylendiisocyanat, 1,4-Cyclohexylendiisocyanat, 1,5-Tetrahydronaphthylendiisocyanat.

Die ungesättigten Polyester A sowie die Komponente C werden in einer bevorzugten Ausführungsform jeweils in dem Monomeren B gelöst, wobei vorzugsweise 30 bis 100 Gew.-Teile Monomer auf 100 Gew.-Teile Polyester bzw. 100 Gew.-Teile von Komponente C verwendet werden.

Die Formmassen aus A, B und C können die üblichen Zusatzstoffe wie Initiatoren, Polymerisationsbeschleuniger, Inhibitoren, Gleitmittel, inerte Lösungsmittel, Füllstoffe, Verstärkungsfasern, Verdickungsmittel und schrumpfmindernde Zusätze enthalten.

Es kommen z.B. in Frage:

- Initiatoren, wie Methylethylketonperoxid, Cyclohexanonperoxid, Benzoylperoxid, tert.-Butylperoktoat, tert.-Butylperbenzoat, Dicumylperoxid, Di-tert.-Dibutylperoxid, sowie Perketale, Percarbonate, C-C-labile Verbindungen und Azoverbindungen.
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.
- Inhibitoren, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranilin, Nitrobenzole, wie m-Dinitrobenzol, Thiodiphenylamin, N-Nitrosoverbindungen, wie N-Nitrosodiphenylamin und Salze von N-Nitroso-N-cyclohexylhydroxylamin.
- Gleitmittel, wie Zink-, Magnesium-und Calciumstearat sowie Polyalkylenetherwachse.
- Paraffine zur Verminderung der Monomerenverdunstung und zur Ausbildung einer klebfreien Oberfläche.
- Füllstoffe, z.B. übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente. Sie werden in Mengen von 0 bis 250 Gew.-%, vorzugsweise 20 bis 150 Gew.-%, bezogen auf A + B + C, eingesetzt.
- Verstärkungsfasern, z.B. anorganische oder organische Fasern als Rovings oder flächige, gegebenenfalls

daraus gewebte Gebilde, wie Matten, z.B. aus Glas, Kohlenstoff, Asbest, Cellulose und synthetischen organischen Fasern, wie Polycarbonsäureester, Polycarbonate und Polyamide. Die Verstärkungsfasern werden in Mengen von 5 bis 400, vorzugweise 10 bis 250 Gew.-%, bezogen auf A + B + C, eingesetzt.

- Verdickungsmittel, z.B. Oxide oder Hydroxide des Lithiums, Magnesiums, Calciums, Aluminiums oder Titans. Bevorzugt ist Magnesiumoxid. Die Verdickungsmittel werden den Formmassen in Mengen von 0,2 bis 5, vorzugsweise von 0,5 bis 3 Gew.-%, bezogen auf A + B + C, zugesetzt.
- Schrumpfmindernde Polymerisate, wie Polystyrol, Polymethylmethacrylat, Polyvinylacetat, Polyethylen, Polybutadien, Polyisopren, Celluloseester, Polyvinylchlorid und entsprechende Copolymere und Pfropfcopolymere. Es eignen sich auch Kondensationspolymere, wie gesättigte Polyester oder Polyesterurethane. Die schrumpfmindernden Zusätze werden in Mengen von 0 bis 30, vorzugsweise 3 bis 20 Gew.-%, bezogen auf A + B, eingesetzt.

Durch den erfindungsgemäßen Zusatz der Komponente C zu ungesättigten Polyesterharzen wird die Rißanfälligkeit des ausgehärteten Formstoffs bei Stoß-und Schlageinwirkung wesentlich verringert. In einer sehr bevorzugten Ausführung beträgt der Anteil an Komponente C 10 bis 20 Gew.-%, bezogen auf A + B.

Die in den folgenden Beispielen genannten Teile und Prozente beziehen sich auf das Gewicht. Die Empfindlichkeit der ausgehärteten Formstoffe gegenüber Rißbildung bei Stoß-und Schlageinwirkung wurde mit Hilfe eines Kugelfalltests an Laminaten ermittelt.

## Beispiele

### 1. Herstellung von UP-Harz 1

392 Teile Maleinsäureanhydrid, 1184 Teile Phthalsäureanhydrid und 930 Teile Propylenglykol werden unter Rühren und Darüberleiten von Stickstoff auf 190°C erhitzt. Die Kondensation wird bei dieser Temperatur bis Säurezahl 45 fortgesetzt. 2000 Teile des so erhaltenen ungesättigten Polyesters werden nach Zugabe von 0,3 Teilen Hydrochinon bei 120°C in 1076 Teilen Styrol gelöst.

### 2. Herstellung von UP-Harz 2

216 Teile Maleinsäureanhydrid, 286 Teile Dicyclopentadien und 40 Teile Wasser werden unter Rühren und Darüberleiten von Stickstoff innerhalb von 2 Stunden auf 130°C erhitzt und 2 Stunden bei dieser Temperatur gehalten. 314 Teile Maleinsäureanhydrid und 356 Teile Propylenglykol werden hinzugefügt, es wird auf 200°C erhitzt und bis zu einer Säurezahl von 60 verestert. 120 Teile Dicyclopentadien werden innerhalb einer Stunde hinzugetropft, und die Veresterung wird bis Säurezahl 27 fortgesetzt. 900 Teile des so erhaltenen ungesättigten Polyesters werden nach Zugabe von 0,14 Teilen Hydrochinon bei 120°C in 442 Teilen Styrol gelöst.

### 3. Herstellung des hydroxymethylenphenyl-terminierten Polyoxybutylens

580 Teile Polyoxybutylen ($M_n$ = 2900), 66 Teile Hydroxymethylbenzoesäuremethylester und 0,3 Teile Titantetrabutylat werden unter Rühren und Darüberleiten von Stickstoff innerhalb von 1 Stunde auf 190°C erhitzt und aschließend 15 Stunden bei dieser Temperatur gehalten. Methanol wird abdestilliert, und der Fortschritt der Reaktion wird mit Hilfe der Dünnschicht-Chromatographie verfolgt. Es werden 606 Teile einer gelblichen, wachsartigen Substanz mit Hydroxylzahl 38 erhalten.

### 4. Herstellung des Maleinsäuredihydrodicyclopentadienylmonoester

588 Teile Maleinsäureanhydrid, 792 Teile Dicyclopentadien und 108 Teile Wasser werden unter Rühren und Darüberleiten von Stickstoff auf 125°C erhitzt. 2 Stunden wird bei 125°C und 2 Stunden bei 145°C gehalten. Es werden 1480 Teile eines hellgelben, teilkristallinen Feststoffs mit einer Säurezahl von 226 erhalten

5. Herstellung des Polyoxybutylenoligoesters I (Vergleich)

560 Teile Polyoxybutylen ($M_n$ = 1000) und 110 Teile Maleinsäureanhydrid werden unter Rühren und Darüberleiten von Stickstoff 4 Stunden bei 100°C gehalten. 650 Teile des so erhaltenen Oligoesters werden nach Zugabe von 0,093 Teilen Methylhydrochinon bei 280°C in 429 Teilen Styrol gemischt.

6. Herstellung des Polyoxybutylenoligoesters II

560 Teile Polyoxybutylen ($M_n$ = 2900), 17,4 Teile Toluylen-2,4-diisocyanat werden unter Stickstoff 3 Stunden bei 70 bis 90°C gerührt. 19,6 Teile Maleinsäureanhydrid werden hinzugefügt, und es wird weitere 3 Stunden bei 110°C gerührt. 550 Teile des so erhaltenen Oligoesters werden nach Zugabe von 0,079 Teilen Methylhydrochinon in 235 Teilen Styrol gelöst.

7. Herstellung des Polyoxybutylenoligoesters III

600 Teile hydroxymethylphenyl-terminiertes Polyoxybutylen Ansatz 3 und 16,5 Teile Toluylen-2,4-diisocyanat werden unter Stickstoff 3 Stunden bei 70°C bis 90°C gerührt. 18,6 Teile Maleinsäureanhydrid werden hinzugefügt, und es wird weitere 3 Stunden bei 110°C gerührt. 600 Teile des so erhaltenen Oligoesters werden nach Zugabe von 0,086 Teilen Methylhydrochinon mit 257 Teilen Styrol gemischt.

8. Herstellung des Polyoxybutylenoligoesters IV

560 Teile Polyoxybutylen ($M_n$ = 2900) und 17,4 Teile Toluylen-2,4-diisocyanat werden unter STickstoff 3 Stunden bei 70 bis 90°C gerührt. 44 Teile Maleinsäuredihydrodicyclopentadienylmonoester und 125 ml Xylol werden hinzugefügt, es wird auf 170°C erhitzt, und das Reaktionswasser wird abgetrennt. Die Kondensation wird bis Säurezahl 20 fortgesetzt, und Xylol wird im Vakuum abdestilliert. 550 Teile des so erhaltenen Oligoesters werden nach Zugabe von 0,079 Teilen Methylhydrochinon bei 120°C in 235 Teilen Styrol gelöst.

9. Herstellung des Polyoxybutylenoligoesters V

600 Teile hydroxymethylphenyl-terminiertes Polyoxybutylen Ansatz 3 und 16,5 Teile Toluylen-2,4-diisocyanat werden unter Stickstoff 3 Stunden bei 70 bis 90°C gerührt. 44 Teile Maleinsäuredihydrodicyclopentadienylmonoester und 125 ml Xylol werden hinzugefügt, es wird auf 170°C erhitzt, und das Reaktionswasser wird abgetrennt. Die Kondensation wird bis Säure zahl 22 fortgesetzt, und Xylol wird im Vakuum abdestilliert. 600 Teile des so erhaltenen Oligoesters werden nach Zugabe von 0,086 Teilen Methylhydrochinon bei 120°C mit 257 Teilen Styrol gemischt.

10. Durchführung der Prüfungen

Aus den Harzen bzw. Harzmischungen werden 4 mm dicke Laminate mit 4 Lagen Glasmatte ® Vetrotex M 312) hergestellt. Die Härtung erfolgt mit 2 % Dicumylperoxid in der Presse. Die Probekörper werden nachgehärtet. Das Laminat wird nach Aufprall einer Stahlkugel (Fallhöhe: 75 cm, Durchmesser der Kugel; 5,7 cm, Masse: 760 g) mit einem Diffusionsfarbstoff behandelt und anschließend durchgesägt. Das geschädigte Volumen des Laminats (als Maß für die Rißanfälligkeit) ist eingefärbt und wird ausgemessen.

11. Ergebnisse

| | V1 | V2 | V3 | V4 | E1 | E2 | E3 | E4 | E5 | E6 | E7 | E8 |
|---|---|---|---|---|---|---|---|---|---|---|---|---|
| UP-Harz I | 100 | | 80 | | 80 | | 80 | | 80 | | 80 | |
| UP-Harz II | | 100 | | 80 | | 80 | | 80 | | 80 | | 80 |
| Oligoester I | | | 20 | 20 | | | | | | | | |
| Oligoester II | | | | | 20 | 20 | | | | | | |
| Oligoester III | | | | | | | 20 | 20 | | | | |
| Oligoester IV | | | | | | | | | 20 | 20 | | |
| Oligoester V | | | | | | | | | | | 20 | 20 |
| Nachhärtung | | | | | | | | | | | | |
| T [°C] | 140 | 220 | 140 | 220 | 140 | 220 | 140 | 220 | 140 | 220 | 140 | 220 |
| t [h] | 1 | 24 | 1 | 24 | 1 | 24 | 1 | 24 | 1 | 24 | 1 | 24 |
| Zerstörtes Volumen [$mm^3$] | 1150 | 5000 | 450 | 600 | 150 | 250 | 110 | 150 | 200 | 270 | 120 | 160 |

Die Beispiele E1 bis E8 sind erfindungsgemäß. Bei den Vergleichsbeispielen V1 und V2 wurde keine elastifizierende Komponente C zugesetzt. Bei den Vergleichsbeispielen V3 und V4 war die Komponente C ein nicht kettenverlängerter Ester aus Maleinsäureanhydrid und Polyoxybutylen (nach EP-A-70 755).

## Ansprüche

1. Härtbare Formmassen aus

A) einem ungesättigten Polyester,

B) ethylenisch ungesättigten, mit A copolymerisierbaren Monomeren,

C) 5 - 95 Gew.-%, bezogen auf A + B, eines Polyoxybutylenoligoesters,

sowie gegebenenfalls

D) üblichen Initiatoren, Polymerisationsbeschleunigern, Inhibitoren, Gleitmitteln, inerten Lösungsmitteln, Füllstoffen, Verstärkungsfasern, Verdickungsmitteln und schrumpfmindernden Zusätzen,

dadurch gekennzeichnet, daß die Komponente C ein Ester einer ungesättigten Dicarbonsäure mit einem hydroxylterminierten Polyoxybutylen ist, dessen Kette durch Vorreaktion mit einem Diisocyanat verlängert wurde.

2. Härtbare Formmassen nach Anspruch 1, dadurch gekennzeichnet, daß die Komponente C ein Ester aus 1,5 bis 2 Molen Maleinsäureanhydrid oder Maleinsäuredihydrodicyclopentadienylmonoester und 1 Mol des Umsetzungsprodukts aus 1 Mol eines Diisocyants mit 1,1 bis 2 Molen eines hydroxylterminierten Polyoxybutylens der Formel

$$HO-CH_2-CH_2-CH_2-CH_2-(O-CH_2-CH_2-CH_2-CH_2)_n-OH$$

oder

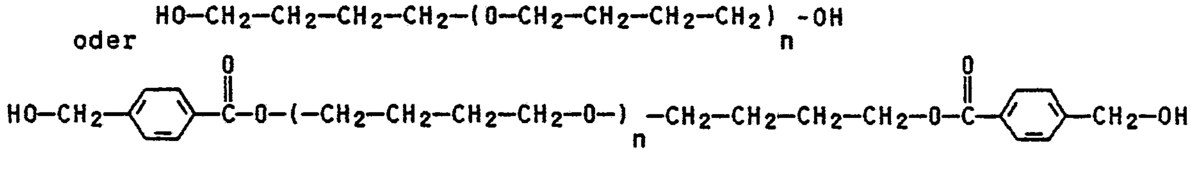

mit n = 6 bis 40 ist.

3. Verwendung der härtbaren Polyesterformmassen nach Anspruch 1 zur Herstellung von gegebenenfalls faserverstärkten Formteilen.